# EUROPÄISCHE PATENTSCHRIFT

(11) **EP 2 361 337 B1**
(45) Veröffentlichungstag und Bekanntmachung des Hinweises auf die Patenterteilung: **22.07.2015**
(21) Anmeldenummer: 09774637.4
(22) Anmeldetag: 10.12.2009
(51) Int. Cl.: E05B 81/20, E05B 81/70, E05F 15/70, E05F 15/00

(54) **VERFAHREN ZUR STEUERUNG EINES SCHLIESSVORGANGS EINES FAHRZEUGFLÜGELS UND KORRESPONDIERENDES FAHRZEUGSCHLIESSSYSTEM**
METHOD FOR CONTROLLING A CLOSING PROCESS OF A VEHICLE AIRFOIL AND CORRESPONDING VEHICLE CLOSING SYSTEM
PROCÉDÉ DE COMMANDE D'UN PROCESSUS DE FERMETURE D'UN BATTANT DE VÉHICULE ET SYSTÈME DE FERMETURE CORRESPONDANT DE VÉHICULE

(30) Priorität: 17.12.2008 DE 102008062641
(43) Veröffentlichungstag der Anmeldung: 31.08.2011
(73) Patentinhaber: Daimler AG, 70327 Stuttgart (DE)
(72) Erfinder: BREITNER, Roland, 71083 Herrenberg (DE); DEISCHL, Hans, 71131 Jettingen (DE); LINDMAYER, Martin, 72172 Sulz (DE); MUCH, Wolfgang, 72119 Ammerbuch (DE); SCHEUNERT, Dieter, 71093 Weil im Schönbuch (DE); SCHULER, Eckart, 71063 Sindelfingen (DE); ZEIDLER, Falk, 71067 Sindelfingen (DE)
(74) Vertreter: JENSEN & SON
(86) Internationale Anmeldenummer: PCT/EP2009/008841
(87) Internationale Veröffentlichungsnummer: WO 2010/075945

(56) Entgegenhaltungen:
- EP-A1- 1 441 100
- WO-A2-2005/005759
- DE-U1-202004 004 676
- JP-A- 61 244 619
- US-A- 4 889 371
- US-A1- 2004 046 419

## Beschreibung

Die Erfindung betrifft ein Verfahren nach dem Patentanspruch 1 zur Steuerung eines automatischen Schließvorgangs eines Fahrzeugflügels, der von einer erkannten Startposition in eine Endposition bewegt wird, die eine Geschlossenstellung des Fahrzeugflügels repräsentiert, und ein korrespondierendes Fahrzeugschließsystem zur Durchführung des Verfahrens nach dem Patentanspruch 3.

Bekannte Verfahren zur Steuerung eines Fahrzeugflügels, wie einer Tür oder einer Klappe, bewegen die Tür oder Klappe von einer Vorraststellung oder einer speziellen Startposition in eine Hauptraststellung bzw. Vollgeschlossenstellung des Schlosses. Abhängig vom Fahrzeugdesign und von der Auslegung des Schlossmechanismus ist der offene Spalt der Tür bzw. Klappe zu Beginn des automatischen Schließvorgangs unterschiedlich groß. Bei einer unsachgemäßen bzw. unvorsichtigen Handhabung besteht durch den offen stehenden Spalt der Tür bzw. Klappe ein gewisses Verletzungsrisiko durch die Möglichkeit, Finger oder Gliedmaßen darin einzuklemmen.

In der Patentschrift DE 103 03 778 B4 wird eine Betätigungsanordnung zum Öffnen und Schließen eines Fahrzeugflügels beschrieben. Die beschriebene Betätigungsanordnung umfasst eine Antriebsanordnung, durch die der Fahrzeugflügel zwischen seiner geöffneten und seiner geschlossenen Stellung bewegbar ist, und einen Fallenverschluss, durch den der Fahrzeugflügel in seiner geschlossenen Stellung am zugehörigen Öffnungsrahmen der Karosserie verriegelt ist, wobei der Verschluss zwei zusammenwirkende Verschlussteile umfasst, die am Fahrzeugflügel einerseits und am Öffnungsrahmen andererseits angeordnet sind. Ein erstes Antriebsmittel der Antriebsanordnung wird vor der letzten Schließbewegungsphase abgeschaltet, wonach der Fahrzeugflügel über ein zweites Antriebsmittel in seine Endlage weiterbewegt wird. Das zweite Antriebsmittel ist als motorische Antriebsvorrichtung ausgeführt, mit der eines der Verschlussteile bei verrastetem Fallenverschluss von einer ausgefahrenen Fangstellung in eine der Endlage des Fahrzeugflügels entsprechende, eingefahrene Nichtgebrauchstellung bewegt werden kann.

Die JP 61 244619 A offenbart ein Verfahren zur Steuerung eines Schließvorgangs eines Fahrzeugflügels, der von einer vollständig geöffneten Startposition in eine vollständig geschlossene Endposition bewegt wird. Bei Erreichen einer fast geschlossenen Zwischenstellung, bei welcher die Türinnenseite über eine Stange einen Schalter betätigt, wird die Tür mit Hilfe einer Zeitschaltuhr für eine zweite Zeitspanne angehalten und überprüft und erst anschließend in die geschlossene Endposition verfahren. Dadurch wird das Einklemmen von Personen zwischen der Tür und dem Fahrzeug verhindert. Aufgabe der Erfindung ist es, ein alternatives Verfahren zur Steuerung eines automatischen Schließvorgangs eines Fahrzeugflügels und ein korrespondierendes Schließsystem zur Durchführung des Verfahrens anzugeben, welche Personen, insbesondere Benutzer aber auch Dritte, vor dem bevorstehenden Schließvorgang warnen.

Die Erfindung löst diese Aufgabe durch Bereitstellung eines Verfahrens zur Steuerung eines Schließvorgangs eines Fahrzeugflügels mit den Merkmalen des Patentanspruchs 1, und durch ein Fahrzeugschließsystem mit den Merkmalen des Patentanspruchs 3. Vorteilhafte Ausführungsformen und Weiterbildungen der Erfindung sind in den abhängigen Ansprüchen angegeben.

Erfindungsgemäß wird der automatische Schließvorgang des Fahrzeugflügels bei Erreichen einer Startposition für eine vorgegebene kurze erste Zeitspanne gestartet und anschließend für eine vorgegebene zweite Zeitspanne unterbrochen, um Benutzer oder Dritte vor dem anstehenden Schließvorgang des Fahrzeugflügels zu warnen. Durch diese spezielle Art der Steuerung des Schließvorgangs zu Beginn des Schließ- bzw. Zuziehvorgangs wird die Sicherheit der Benutzer oder Dritte vor allem bei unsachgemäßer Handhabung erhöht. Das kurze Anlaufen des Schließvorgangs dient als spürbare und erlebbare Warnmeldung für die Benutzer oder Dritte vor dem eigentlichen Schließvorgang, so dass Finger oder Gliedmaßen, die sich eventuell unbemerkt innerhalb des offenen Spalts des Fahrzeugflügels befinden, in vorteilhafter Weise noch rechtzeitig vor dem eigentlichen Schließvorgang herausgezogen werden können. Die erste Zeitspanne ist so kurz gewählt, dass nur ein verhältnismäßig kleiner Schließweg zurückgelegt wird, und die zweite Zeitspanne ist in vorteilhafter Weise so gewählt, dass den Benutzern oder Dritten eine ausreichende Zeitspanne zur Verfügung gestellt wird, um Finger oder andere Gliedmassen aus dem offenen Spalt zu entfernen. Nach Ablauf der zweiten Zeitspanne wird der Schließvorgang für eine dritte Zeitspanne, die wesentlich länger als die erste Zeitspanne ist, fortgesetzt bis der Fahrzeugflügel seine Endposition erreicht hat. Hierbei repräsentiert die Startposition eine Vorraststellung eines Schlosses des Fahrzeugflügels, und die Endposition repräsentiert eine Hauptraststellung des Schlosses des Fahrzeugflügels.

In Ausgestaltung des erfindungsgemäßen Verfahrens wird der Fahrzeugflügel nach Erreichen der Endposition für eine vorgegebenen vierte Zeitspanne weiter in Schließrichtung bewegt, um ein sicheres Schließen des korrespondierenden Fahrzeugflügels sicherzustellen.

Das Schließsystem für ein Fahrzeug zur Durchführung des erfindungsgemäßen Verfahrens umfasst mindestens einen Fahrzeugflügel, der während eines Schließvorgangs von einem Antrieb von einer erkannten Startposition in eine Endposition bewegt wird, welche eine Geschlossenstellung des Fahrzeugflügels repräsentiert. Erfindungsgemäß steuert eine Auswerte- und Steuereinheit bei Erreichen der Startposition den Antrieb eines korrespondierenden Fahrzeugflügels für eine vorgegebene kurze erste Zeitspanne in Schließrichtung an, um den Schließvorgang zu starten. Nach Ablauf der kurzen ersten Zeitspanne unterbricht die Auswerte- und Steuereinheit die Ansteuerung des Antriebs für eine vorgegebene zweite Zeitspanne, um Benutzer oder Dritte vor dem anstehenden Schließvorgang des Fahrzeugflügels zu warnen. Die erste Zeitspanne ist in vorteilhafter Weise so kurz gewählt, dass nur ein verhältnismäßig kleiner Schließweg zurückgelegt wird. Die zweite Zeitspanne ist in vorteilhafter Weise so gewählt, dass dem Benutzer oder Dritten eine ausreichende Zeitspanne zur Verfügung gestellt wird, um Finger oder andere Gliedmaßen, die sich im offenen Spalt des Fahrzeugflügels befinden können, aus diesem zu entfernen. Nach Ablauf der festgelegten zweiten Zeitspanne steuert die Auswerte- und Steuereinheit den Antrieb wieder in Schließrichtung an, um den Schließvorgang für eine dritte Zeitspanne, die wesentlich länger als die kurze erste Zeitspanne ist, fortzusetzen, bis der korrespondierende Fahrzeugflügel seine Endposition erreicht hat. Der mindestens eine Fahrzeugflügel kann beispielsweise als Fahrzeugtür und/oder Heckdeckel bzw. Hecktür ausgeführt sein. Dabei repräsentiert die Startposition eine Vorraststellung eines Schlosses des Fahrzeugflügels, und die Endposition repräsentiert eine Hauptraststellung des Schlosses des Fahrzeugflügels.

In Ausgestaltung des erfindungsgemäßen Schließsystems ermittelt die Auswerte- und Steuereinheit die Position des mindestens einen Fahrzeugflügels durch Auswerten von Informationen, die von Positionserfassungsmitteln bereitgestellt werden. Die Positionserfassungsmittel können beispielsweise mindestens einen Endschalter und/oder mindestens einen Positionserfassungssensor umfassen.

Nach Erreichen der Endposition kann die Auswerte- und Steuereinheit den Antrieb des korrespondierenden Fahrzeugflügels für eine vorgegebene vierte Zeitspanne weiter in Schließrichtung ansteuern, um ein sicheres Einrasten des Schlosses in die Hauptraststellung umzusetzen.

Vorteilhafte Ausführungsformen der Erfindung sind in den Zeichnungen dargestellt und werden nachfolgend beschrieben.

Dabei zeigen:
Fig. 1 ein Blockdiagramm eines Ausführungsbeispiel eines erfindungsgemäßen Schließsystems für ein Fahrzeug, und
Fig. 2 ein Zustandsdiagramm für einen Antrieb eines Fahrzeugflügels.

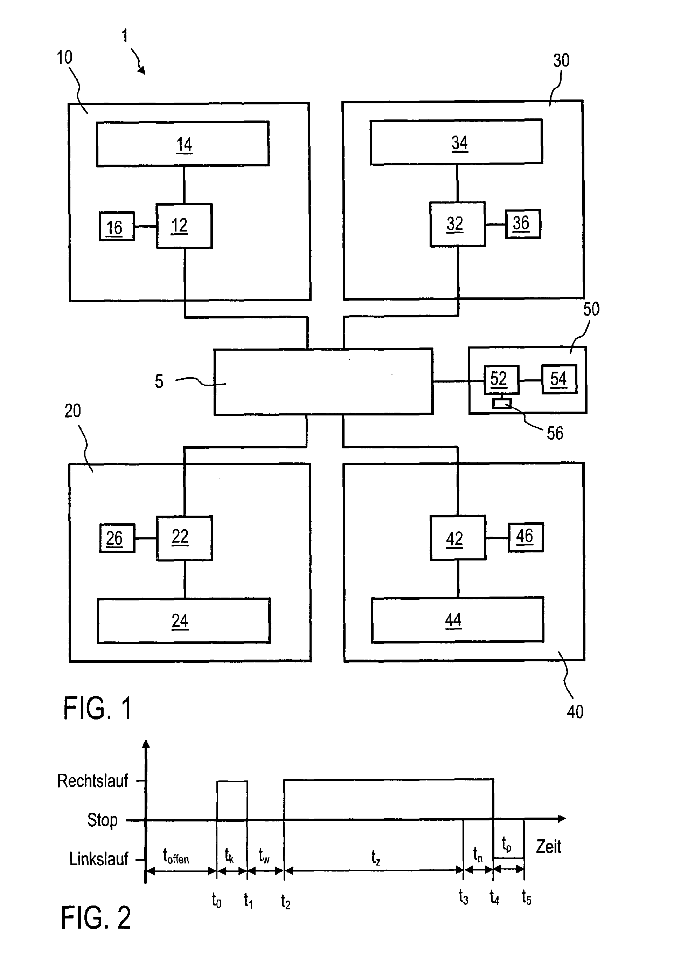

Wie aus Fig. 1 ersichtlich ist, umfasst das dargestellte Ausführungsbeispiel eines erfindungsgemäßen Schließsystems 1 für ein Kraftfahrzeug vier als Türen ausgeführte Fahrzeugflügel 10, 20, 30, 40 und einen als Heckdeckel ausgeführten Fahrzeugflügel 50. Jeder der Fahrzeugflügel 10, 20, 30, 40, 50 kann während eines Schließvorgangs von einem korrespondierenden Antrieb 14, 24, 34, 44, 54, der beispielsweise als Elektromotor, Fluidmotor usw. ausgeführt ist, von einer erkannten Startposition in eine Endposition bewegt werden, die eine Geschlossenstellung repräsentiert. Erfindungsgemäß repräsentiert die Startposition eine Vorraststellung eines Schlosses des Fahrzeugflügels 10, 20, 30, 40, 50, und die Endposition repräsentiert eine Hauptraststellung des Schlosses des Fahrzeugflügels 10, 20, 30, 40, 50. Zur Durchführung des Schließvorgangs eines der Fahrzeugflügel 10, 20, 30, 40, 50 steuert eine korrespondierende Auswerte- und Steuereinheit 12, 22, 32, 42, 52 den korrespondierenden Antrieb 14, 24, 34, 44, 54 in Schließrichtung an. Eine aktuelle Position eines korrespondierenden Fahrzeugflügels 10, 20, 30, 40, 50 ermittelt die zugehörige Auswerte- und Steuereinheit 12, 22, 32, 42, 52 durch Auswerten von Informationen, die von Positionserfassungsmitteln 16, 26, 36, 46, 56 bereitgestellt werden. Die Positionserfassungsmittel 16, 26, 36, 46, 56 umfassen beispielsweise Endschalter, Positionserfassungssensoren usw. Die Auswerte- und Steuereinheiten 12, 22, 32, 42, 52 der Fahrzeugflügel 10, 20, 30, 40, 50 sind mit einem Fahrzeugbussystem 5 gekoppelt und stellen diesem beispielsweise Informationen über einen aktuellen Schließzustand des korrespondierenden Fahrzeugflügels 10, 20, 30, 40, 50 zur Verfügung. Zudem empfangen die Auswerte- und Steuereinheiten 12, 22, 32, 42, 52 Befehle und Informationen von übergeordneten Systemen, wie beispielsweise einem Zugangsberechtigungssystem, einem Fernbedienungssystem usw.

Nachfolgend wird unter Bezugnahme auf Fig. 1 und 2 ein Ausführungsbeispiel des erfindungsgemäßen Verfahrens zur Steuerung des Schließvorgangs eines Fahrzeugflügels 10, 20, 30, 40, 50 beschrieben. Fig. 2 zeigt ein schematisches Zustandsdiagramm für einen Antrieb 14, 24, 34, 44, 54 eines Fahrzeugflügels 10, 20, 30, 40, 50, wobei Reaktionszeiten und/oder Entprellzeiten von Elektronikbaugruppen, wie Schalter, Sensoren usw., nicht berücksichtigt sind.

Wird ein offen stehender Fahrzeugflügel 10, 20, 30, 40, 50, der in Fig. 2 durch eine Zeitspanne toffen repräsentiert wird, manuell geschlossen, und erreicht der korrespondierende Fahrzeugflügel 10, 20, 30, 40, 50 zu einem ersten Zeitpunkt t0 die Startposition für den automatischen Schließ- und/oder Zuziehvorgang, dann steuert die Auswerte- und Steuereinheit 12, 22, 32, 42, 52 den Antrieb 14, 24, 34, 44, 54 des korrespondierenden Fahrzeugflügels 10, 20, 30, 40, 50 vom ersten Zeitpunkt t0 bis zu einem folgenden zweiten Zeitpunkt t1 für eine vorgegebene kurze erste Zeitspanne tk in Schließrichtung an. Nach Ablauf der kurzen ersten Zeitspanne tk unterbricht die Auswerte- und Steuereinheit 12, 22, 32, 42, 52 am zweiten Zeitpunkt t1 den Schließvorgang bis zu einem dritten Zeitpunkt t2 für eine vorgegebene zweite Zeitspanne tw, um Fahrzeugnutzer oder Dritte vor dem anstehenden Schließvorgang des Fahrzeugflügels 10, 20, 30, 40, 50 zu warnen. Am dritten Zeitpunkt t2 steuert die Auswerte- und Steuereinheit 12, 22, 32, 42, 52 den Antrieb 14, 24, 34, 44, 54 wieder in Schließrichtung an, um den Schließvorgang für eine dritte Zeitspanne tz, die wesentlich länger als die kurze erste Zeitspanne ist, fortzusetzen, bis der korrespondierende Fahrzeugflügel 10, 20, 30, 40, 50 seine Endposition zu einem vierten Zeitpunkt t3 erreicht hat. Um ein sicheres Einrasten des Schlosses in die Hauptraststellung umzusetzen, steuert die Auswerte- und Steuereinheit 12, 22, 32, 42, 52 den Antrieb 14, 24, 34, 44, 54 des korrespondierenden Fahrzeugflügels 10, 20, 30, 40, 50 nach Erreichen der Endposition zum vierten Zeitpunkt t3 für eine vorgegebene vierte Zeitspanne tn, die auch als Nachlaufzeit bezeichnet wird, bis zum Erreichen eines fünften Zeitpunktes t4 weiter in Schließrichtung an. Mit dem Erreichen des fünften Zeitpunktes t4 invertiert die Auswerte- und Steuereinheit 12, 22, 32, 42, 52 die Bewegungsrichtung des Antriebs 14, 24, 34, 44, 54 bis zu einem sechsten Zeitpunkt t5, um den Antrieb 14, 24, 34, 44, 54 während der Zeitspanne tp in eine definierte Parkposition zu bewegen.

Ausführungsformen des erfindungsgemäßen Verfahrens zur Steuerung eines Schließvorgangs eines Fahrzeugflügels und des erfindungsgemäßen Schließsystems erhöhen in vorteilhafter Weise die Sicherheit des Benutzers bzw. Insassen, insbesondere bei unsachgemäßer Handhabung. Das kurze Anlaufen des korrespondierenden Antriebs dient als spürbare und erlebbare Warnmeldung vor dem eigentlichen Schließvorgang, so dass Finger oder Gliedmaßen, die sich eventuell unbemerkt innerhalb des offenen Spalts befinden, noch rechtzeitig herausgezogen werden können.

## Patentansprüche

1. Verfahren zur Steuerung eines automatischen Schließvorgangs eines Fahrzeugflügels, der von einer erkannten Startposition in eine Endposition bewegt wird, die eine Geschlossenstellung des Fahrzeugflügels (10, 20, 30, 40, 50) repräsentiert, wobei bei Erreichen der Startposition der Schließvorgang des Fahrzeugflügels (10, 20, 30, 40, 50) für eine vorgegebene kurze erste Zeitspanne (tk) gestartet wird und anschließend für eine vorgegebenen zweite Zeitspanne (tw) unterbrochen wird, um Benutzer oder Dritte vor dem anstehenden Schließvorgang des Fahrzeugflügels (10, 20, 30, 40, 50) zu warnen und wobei nach Ablauf der zweiten Zeitspanne (tw) der Schließvorgang für eine dritte Zeitspanne (tz), die wesentlich länger als die kurze erste Zeitspanne (tk) ist, fortgesetzt wird, bis der Fahrzeugflügel (10, 20, 30, 40, 50) die Endposition erreicht hat und wobei die Startposition eine Vorraststellung eines Schlosses des Fahrzeugflügels (10, 20, 30, 40, 50) repräsentiert, und die Endposition eine Hauptraststellung des Schlosses des Fahrzeugflügels (10, 20, 30, 40, 50) repräsentiert.

2. Verfahren nach Anspruch 1,
**dadurch gekennzeichnet, dass** der Fahrzeugflügel (10, 20, 30, 40, 50) nach Erreichen der Endposition für eine vorgegebenen vierte Zeitspanne (tn) weiter in Schließrichtung bewegt wird, um ein sicheres Schließen des korrespondierenden Fahrzeugflügel (10, 20, 30, 40, 50) sicherzustellen.

3. Schließsystem für ein Fahrzeug zur Durchführung des Verfahrens nach einem der Ansprüche 1 oder 2, das mindestens einen Fahrzeugflügel (10, 20, 30, 40, 50) umfasst, der während eines Schließvorgangs von einem Antrieb (14, 24, 34, 44, 54) von einer erkannten Startposition in eine Endposition bewegbar ist, die eine Geschlossen-Stellung repräsentiert, wobei eine Auswerte- und Steuereinheit (12, 22, 32, 42, 52) bei Erreichen der Startposition den Antrieb (14, 24, 34, 44, 54) eines korrespondierenden Fahrzeugflügels (10, 20, 30, 40, 50) für eine vorgegebene kurze erste Zeitspanne (tk) in Schließrichtung ansteuert, um den Schließvorgang zu starten, wobei die Auswerte- und Steuereinheit (12, 22, 32, 42, 52) die Ansteuerung des Antriebs (14, 24, 34, 44, 54) nach Ablauf der kurzen ersten Zeitspanne für eine vorgegebene zweite Zeitspanne (tw) unterbricht, um Benutzer oder Dritte vor dem anstehenden Schließvorgang des Fahrzeugflügels (10, 20, 30, 40, 50) zu warnen, wobei die Startposition eine Vorraststellung eines Schlosses des Fahrzeugflügels (10, 20, 30, 40, 50) repräsentiert, und die Endposition eine Hauptraststellung des Schlosses des Fahrzeugflügels (10, 20, 30, 40, 50) repräsentiert und wobei die Auswerte- und Steuereinheit (12, 22, 32, 42, 52) den Antrieb (14, 24, 34, 44, 54) nach Ablauf der zweiten Zeitspanne (tw) wieder in Schließrichtung ansteuert, um den Schließvorgang für eine dritte Zeitspanne (tz), die wesentlich länger als die kurze erste Zeitspanne (tk) ist, fortzusetzen, bis der korrespondierende Fahrzeugflügel (10, 20, 30, 40, 50) die Endposition erreicht hat.

4. Schließsystem nach Anspruch 3,
**dadurch gekennzeichnet, dass** die Auswerte- und Steuereinheit (12, 22, 32, 42, 52) die Position des mindestens einen Fahrzeugflügels (10, 20, 30, 40, 50) durch Auswerten von Informationen ermittelt, die von Positionserfassungsmitteln (16, 26, 36, 46, 56) bereitgestellt sind, wobei die Positionserfassungsmittel (16, 26, 36, 46, 56) mindestens einen Endschalter und/oder mindestens einen Positionserfassungssensor umfassen.

5. Schließsystem nach Anspruch 3 oder 4,
**dadurch gekennzeichnet, dass** die Auswerte- und Steuereinheit (12, 22, 32, 42, 52) den Antrieb (14, 24, 34, 44, 54) des korrespondierenden Fahrzeugflügels (10, 20, 30, 40, 50) nach Erreichen der Endposition für eine vorgegebenen vierte Zeitspanne (tn) weiter in Schließrichtung ansteuert, um ein sicheres Einrasten des Schlosses in die Hauptraststellung umzusetzen.

6. Schließsystem nach einem der Ansprüche 3 bis 5,
**dadurch gekennzeichnet, dass** der mindestens eine Fahrzeugflügel (10, 20, 30, 40, 50) als Fahrzeugtür (10, 20, 30, 40) und/oder Heckdeckel (50) ausgeführt ist.

## Claims

1. Method for controlling an automatic closing process of a vehicle wing which is moved from a detected starting position into an end position representing a closed position of the vehicle wing (10, 20, 30, 40, 50), wherein, on reaching the starting position, the closing process of the vehicle wing (10, 20, 30, 40, 50) is started for a preset short first time interval (tk) and then interrupted for a preset second time interval (tw), in order to alert users or third parties of the upcoming closing process of the vehicle wing (10, 20, 30, 40, 50), and wherein, on expiry of the second time interval (tw), the closing process is continued for a third time interval (tz), which is considerably longer than the short first time interval (tk), until the vehicle wing (10, 20, 30, 40, 50) has reached the end position, and wherein the starting position represents a preliminary latching position of a lock of the vehicle wing (10, 20, 30, 40, 50) and the end position represents a main latching position of the lock of the vehicle wing (10, 20, 30, 40, 50).

2. Method according to claim 1,
**characterised in that** the vehicle wing (10, 20, 30, 40, 50) continues, on reaching the end position, to be moved in the closing direction for a preset fourth time interval (tn), in order to ensure a secure closure of the vehicle wing (10, 20, 30, 40, 50).

3. Closing system for a vehicle for carrying out the method according to claim 1 or 2, the closing system comprising at least one vehicle wing (10, 20, 30, 40, 50), which can be moved in a closing process by a drive (14, 24, 34, 44, 54) from a detected starting position into an end position representing a closed position, wherein an evaluation and control unit (12, 22, 32, 42, 52) controls, on reaching the starting position, the drive (14, 24, 34, 44, 54) of a corresponding vehicle wing (10, 20, 30, 40, 50) in the closing direction for a preset short first time interval (tk), in order to start the closing process, wherein the evaluation and control unit (12, 22, 32, 42, 52) interrupts the control of the drive (14, 24, 34, 44, 54) on expiry of the short first time interval for a preset second time interval (tw), in order to alert users or third parties of the upcoming closing process of the vehicle wing (10, 20, 30, 40, 50), wherein the starting position represents a preliminary latching position of a lock of the vehicle wing (10, 20, 30, 40, 50) and the end position represents a main latching position of the lock of the vehicle wing (10, 20, 30, 40, 50), and wherein the evaluation and control unit (12, 22, 32, 42, 52) once again controls the drive (14, 24, 34, 44, 54) in the closing direction on expiry of the second time interval (tw), in order to continue the closing process for a third time interval (tz), which is considerably longer than the short first time interval (tk), until the corresponding vehicle wing (10, 20, 30, 40, 50) has reached the end position.

4. Closing system according to claim 3,
**characterised in that** the evaluation and control unit (12, 22, 32, 42, 52) determines the position of the at least one vehicle wing (10, 20, 30, 40, 50) by evaluating information provided by position sensing means (16, 26, 36, 46, 56), the position sensing means (16, 26, 36, 46, 56) comprising at least one limit switch and/or at least one position sensor.

5. Closing system according to claim 3 or 4,
**characterised in that** the evaluation and control unit (12, 22, 32, 42, 52) continues, on reaching the end position, to control the corresponding vehicle wing (10, 20, 30, 40, 50) in the closing direction for a preset fourth time interval (tn), in order to ensure a secure latching of the lock in the main latching position.

6. Closing system according to any of claims 3 to 5,
**characterised in that** the at least one vehicle wing (10, 20, 30, 40, 50) is designed as a vehicle door (10, 20, 30 40) and/or a tailgate (50).

## Revendications

1. Procédé de commande d'un processus de fermeture automatique d'un battant de véhicule qui est amené d'une position de départ détectée à une position finale laquelle représente la position fermée du battant de véhicule (10, 20, 30, 40, 50), le processus de fermeture commence dès que le battant de véhicule (10, 20, 30, 40, 50) atteint la position de départ et dure un premier laps de temps (tk) court et prédéterminé puis il est interrompu pendant un deuxième laps de temps (tk) prédéterminé pour prévenir l'utilisateur ou un tiers de l'imminence du procédé de fermeture du battant de véhicule (10, 20, 30, 40, 50) et après l'écoulement du second laps de temps (tw) du processus de fermeture pour un troisième laps de temps (tz) qui est plus essentiellement plus long que le premier laps de temps (tk), est poursuivi jusqu'à ce que le battant de véhicule (10, 20, 30, 40, 50) a atteint la position finale et la position de départ représente une position de pré-verrouillage du verrou du battant de véhicule (10, 20, 30, 40, 50).

2. Procédé selon la revendication 1, **caractérisé en ce que** le battant de véhicule (10, 20, 30, 40, 50) est amené davantage dans la direction de fermeture une fois la position finale atteinte pour un quatrième laps de temps (tn) prédéfini pour garantir une fermeture sûre du battant de véhicule (10, 20, 30, 40, 50) correspondant.

3. Système de fermeture pour un véhicule destiné à l'exécution du procédé selon l'une quelconque des revendications 1 ou 2, qui comprend au moins un battant de véhicule (10, 20, 30, 40, 50), qui pendant un processus de fermeture d'un entraînement (14, 24, 34, 44, 54) est amené à partir d'une position de départ détectée dans une position finale, qui représente une position fermée ; une fois la position de départ atteinte, une unité de commande et d'évaluation (12, 22, 32, 42, 52) dirige l'entraînement (14, 24, 34, 44, 54) d'un battant de véhicule (10, 20, 30, 40, 50) correspondant pendant un premier laps de temps (tk) court et prédéfini dans la direction de fermeture pour commencer le processus de fermeture, l'unité de commande et d'évaluation (12, 22, 32, 42, 52) interrompant la commande de l'entraînement (14, 24, 34, 44, 54) après l'écoulement du premier laps de temps court pour un deuxième laps de temps (tw) prédéfini, pour avertir l'utilisateur ou un tiers pour prévenir l'utilisateur ou un tiers de l'imminence du procédé de fermeture du battant de véhicule (10, 20, 30, 40, 50), la position de départ représentant une position de pré-verrouillage d'un verrou du battant de véhicule (10, 20, 30, 40, 50), et la position finale représentant une position de verrouillage principale du verrou du battant de véhicule (10, 20, 30, 40, 50) et l'unité de commande et d'évaluation (12, 22, 32, 42, 52) dirigeant l'entraînement (14, 24, 34, 44, 54) après l'écoulement du deuxième laps de temps (tw) à nouveau dans la direction de fermeture, afin de poursuivre le processus de fermeture pendant un troisième laps de temps (tz), qui est essentiellement supérieur au premier laps de temps (tk) court, jusqu'à ce que le battant de véhicule (10, 20, 30, 40, 50) correspondant atteigne la position finale.

4. Système de fermeture selon la revendication 3, **caractérisé en ce que** l'unité de commande et d'évaluation (12, 22, 32, 42, 52) détermine la position de l'au moins un battant de véhicule (10, 20, 30, 40, 50) par évaluation d'informations, qui sont fournies par les moyens de détection de position (16, 26, 36, 46, 56), les moyens de détection de position (16, 26, 36, 46, 56) comprenant au moins un interrupteur de fin de course et/ou au moins un capteur de détection de position.

5. Système de fermeture selon la revendication 3 ou la revendication 4, **caractérisé en ce que** l'unité de commande et d'évaluation (12, 22, 32, 42, 52) dirige l'entraînement (14, 24, 34, 44, 54) du battant de véhicule (10, 20, 30, 40, 50) dans la direction de fermeture une fois la position finale atteinte pour un quatrième laps de temps (tn) prédéfini pour garantir un verrouillage sûr du verrou dans la position de verrouillage principale.

6. Système de fermeture selon l'une quelconque des revendications 3 à 5, **caractérisé en ce que** l'au moins un battant de véhicule (10, 20, 30, 40, 50) est conçu en tant que porte de véhicule (10, 20, 30, 40) et/ou comme capot arrière (50).
